(19)

**Europäisches Patentamt**
**European Patent Office**
**Office européen des brevets**

(11)  **EP 4 152 009 B1**

(12)  **EUROPEAN PATENT SPECIFICATION**

(45) Date of publication and mention
of the grant of the patent:
**09.04.2025   Bulletin 2025/15**

(51) International Patent Classification (IPC):
**G01P 3/488** *(2006.01)*   **G01P 3/486** *(2006.01)*
**G01P 3/483** *(2006.01)*   **G01P 3/49** *(2006.01)*
**G01B 7/00** *(2006.01)*   **G01P 3/489** *(2006.01)*
**G01D 5/14** *(2006.01)*

(21) Application number: **21197746.7**

(22) Date of filing: **20.09.2021**

(52) Cooperative Patent Classification (CPC):
**G01P 3/488; G01D 5/145; G01P 3/483;**
**G01P 3/486; G01P 3/489; G01P 3/49;** G01D 5/246

(54)  **SENSOR AND METHOD TO MEASURE THE SPEED AND AXIAL DISPLACEMENT OF A ROTATING TARGET AND TO CONTROL A CONTINUOUSLY VARIABLE TRANSMISSION**

SENSOR UND VERFAHREN ZUR MESSUNG DER GESCHWINDIGKEIT UND AXIALEN LAGE EINES ROTIERENDEN BAUTEILS UND ZUR STEUERUNG EINES STUFENLOSEN GETRIEBES

CAPTEUR ET PROCÉDÉ DE MESURE DE LA VITESSE ET DU DÉPLACEMENT AXIAL D´UNE CIBLE ROTATIVE ET DE COMMANDE D'UNE TRANSMISSION VARIABLE EN CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2023   Bulletin 2023/12**

(73) Proprietor: **TE Connectivity Germany GmbH**
**64625 Bensheim (DE)**

(72) Inventors:
• **SCHERNER, Simon**
**67346 Speyer (DE)**
• **ZAWADZKY, Peter Kurt**
**67346 Speyer (DE)**

(74) Representative: **Grünecker Patent- und Rechtsanwälte PartG mbB Leopoldstraße 4 80802 München (DE)**

(56) References cited:
**EP-A1- 2 012 086       DE-A1- 19 522 840**
**DE-A1- 19 609 792**

**Description**

The present invention relates to a sensor and a belonging method of controlling a continuously variable transmission (CVT) which enables the measurement of both the axial displacement of the pulleys and the rotational speed.

Today, the control of a CVT is done by two speed and oil pressure sensors without direct position feedback of the pulleys. An example of a control device for controlling a CVT is disclosed in US 7 402 118 B2. The control device according to this document has an oil pressure control unit which supplies an oil pressure to a primary pulley and secondary pulley based on a command signal indicative of a target speed-reduction ratio, a sensor which detects a rotation speed of the primary pulley, and a controller which transmits the command signal indicative of the target speed-reduction ratio to the oil pressure control unit. The controller is programmed to set the target speed-reduction ratio to a first speed-reduction ratio, calculate a first predetermined rotation speed of the primary pulley at which the V-belt reaches a first limiting temperature at the first speed reduction ratio, calculate a first elapsed time after the detected rotation speed of the primary pulley exceeds the first predetermined rotation speed, maintain the first speed-reduction ratio when the first elapsed time is equal to or less than a first predetermined time, and set the target speed-reduction ratio to a second speed-reduction ratio smaller than the first speed-reduction ratio when the first elapsed time exceeds the first predetermined time. At the second speed-reduction ratio, the temperature of the V-belt should become equal to or less than the first limiting temperature throughout the permitted rotation speed region of the primary pulley.

In CVT, the width of both the engine and tire pulleys is adjusted for controlling the torque and speed from the engine to the tires. Today, the actual position of the pulleys is not directly measured but indirectly derived from the rotational speed of the pulleys and the oil pressure that is used for adjusting the pulleys. Using no direct position feedback of the pulleys results in slow control response and hence lower transmission efficiency. Moreover, no detection of wear and slippage is possible, and diagnostic coverage in general is low.

The main reason for the low efficiency of modern production CVTs is the high clamping forces in the variator necessary to transfer engine torque (see Bonsen et. al. (2005): "Performance optimization of the push-belt CVT by variator slip control", Int. J. Vehicle Design, Vol. 39, No. 3). To prevent belt slip at all times, the clamping forces in modern production CVTs are usually much higher (typically 30% or more) than needed for normal operation. Higher clamping forces result in additional losses in both the hydraulic and the mechanical system. This is due to increased pump losses and friction losses because of the extra mechanical load that is applied on all variator parts. Excess clamping forces also reduce the endurance life of the V-belt type element, since the net pulling force in this element is larger than strictly necessary for the transfer of engine power. Also the contact pressure between V-belt and pulley is higher than strictly necessary, leading to increased wear. This excess loading leads to heavier components, thereby compromising power density.

Document DE 195 22 840 A1 discloses a device for detecting the movement of an axially displaceable component rotating about an axis, such as a pulley of a CVT. The device comprises a sensor which generates signals as a function of markings arranged on the circumferential surfaces of the component. The frequency of the signals generated by the sensor is a measure of the angular velocity and their shape a measure of the axial position or displacement of the component.

A similar sensor for a CVT is also known from DE 196 09 792 A1.

Document EP 2 012 086 A1 discloses a displacement measurement arrangement for measuring the movement of a body, the arrangement comprising a target located on the body and a probe having an observation axis, characterised in that the target comprises at least one projection of varying width relative to the intersection path of the observation axis and measurement of the movement of the body is made in more than one direction simultaneously.

In view of the prior art, it is an object of the present invention to provide an improved control system for a CVT and a corresponding method that can achieve higher transmission and drive efficiency.

This is achieved by the feartures of the independent claims.

The present invention is based on the idea that a sensor, for example an eddy current based sensor, is used in combination with a specific target wheel design which enables the measurement of both the axial displacement and the rotational speed of a rotationally and axially moving element. Thereby, the sensor provides a time-based signal that represents both the rotational speed and the axial displacement of the target wheel. The target wheel may for example be made of an electrically conducting material and comprise numerous recesses around its circumference whose width steadily changes in axial direction. Each recess represents a change in air gap between the sensor and the target wheel, which results in a frequency change of the resonant circuit of the eddy current sensor. Since the width of the recesses changes in axial direction, the ratio between high and low air gap also changes. Hence, axial displacement of the target wheel results in a variation of the duty cycle. The frequency of the signal correlates to the rotational speed of the wheel.

Specifically, the present invention relates to an encoder device, which comprises a sensor device and at least one target wheel attachable to a rotationally and axially, with respect to the rotational axis, movable element, the target wheel having a plurality of identical target elements arranged at regular intervals around a circumference of the target wheel, wherein the width of each target element continuously changes in axial direction. The sensor device comprises at least one sensor probe which is operable to detect the target elements and to provide a time-based sensor signal that represents both the rotational speed and axial displacement of at least one target wheel based on the detection of the target elements, and a processing unit which is operable to provide an output signal of the encoder device.

According to a further embodiment, each target element is formed by a region having a different current carrying capacity and/or optical characteristics and/or magnetic characteristics and/or target wheel topography compared to the remaining target wheel.

According to another embodiment, the change of the target wheel topography is one or more of an air gap in the target wheel, a recess in the target wheel, a groove on the target wheel, a slope or edge of the target wheel, or a hole in or of the target wheel. The change of current carrying capacity is a result of a target element material with an electrical conductivity different from a material of the remaining target wheel, the target element material being a steel, a copper or a hard potting and/or the change of current carrying capacity can be a result of the change of the target wheel topography.

Advantageously, the at least one target wheel is made of a steel or a polymer with electrically conducting target elements. Such a polymer wheel can be fabricated in a particularly economic way.

Advantageously, the elements of the target wheel can be arranged according to a Nonius coding in order to improve the accuracy of the axial displacement signal of the encoder device and/or to allow an additional absolute angle measurement.

Advantageously, the sensor device may comprise an eddy current sensor, a magnetometer, a capacitive sensor, or an optical sensor.

The sensor probe may include a sensor coil, the sensor coil being a flat wound coil on a bobbin and/or a flat coil on a PCB in one or more layers. Moreover, the sensor coil may have a transmitting coil and a receiving coil or a combined coil that is used as transmitting and receiving coil that are either wound coils or PCB coils on different layers, and/or a resonance signal of the sensor probe can be induced in the receiving coil and the processing unit is operable to receive either a voltage, a current, a frequency, or a phase shift and to create a demodulated signal therefrom. Such a sensor probe can yield good detection results even when there is dirt or oil on the target wheel.

According to another embodiment, the duty cycle in terms of the ratio of high and low current carrying capacity changes linearly and continuously in an axial direction of the target wheel. The change in the duty cycle in terms of the ratio of high and low current carrying capacity may be the effect of a change of the shape of the target elements in axial direction.

Advantageously, the target elements substantially have the shape of a triangle, a trapezoid, a semicircle, or any other suitable shape, which is arranged symmetrically along the rotational axis of the movable element. The sides of the triangles or trapezoids may be straight lines or have the shape of an arcsine function.

According to another embodiment, each target element comprises at least two calibration elements, which are arranged along the rotational axis of the target wheel, which are separated by a predetermined distance, and which are detectable and distinguishable from the target elements and the remaining target wheel by the sensor device. The processing unit may be operable to self-calibrate the sensor device based on the predetermined distance of the calibration elements and the measured distance of the calibration elements.

The present invention also relates to a control system for controlling a continuously variable transmission, wherein the continuously variable transmission has a primary pulley and a secondary pulley with a V-belt looped around the primary and secondary pulleys. The control system comprises at least one target wheel attachable to the primary pulley and/or the secondary pulley, the target wheel having a plurality of identical target elements arranged at regular intervals around a circumference of the target wheel, wherein the width of each target element continuously changes in axial direction, and a sensor device. The sensor device comprises at least one sensor probe which is operable to detect the target elements and to provide a time-based signal that represents both the rotational speed and axial displacement of the at least one target wheel based on the detection of the target elements, and a processing unit which is operable to provide an output signal of the encoder.

The control system for controlling a continuously variable transmission according to the present invention may further comprise a gear ratio controller for controlling the gear ratio and a belt slippage controller for controlling the belt slippage based on the gear ratio. Thereby, belt slippage caused by the motor side can be prevented. Belt slippage only occurs in the case of a blockade of the wheels and can be controlled by the slippage controller. The gear ratio should be chosen such that the motor works most efficiently.

The present invention can be used to determine the axial displacement and rotational speed of a primary pulley on the engine side and a secondary pulley on the tire side as control input parameters. Using sensors on both the engine and the tire side can improve the diagnostic and safety features of the control system due to an increase in redundancy and functional safety. For example, a rocking motion of the target wheel can be detected.

Moreover, the present invention is useful for improving controllers like the oil pressure controller, for example using servo motors or any other actuator for pulley actuation. Existing controllers can be improved by providing direct position feedback, which results in more reliable, more efficient, and safer controller designs.

Furthermore, the calculation of the actual continuous variable transmission torque from the pulley displacement, speed information, and additional variables from the engine control unit (ECU) concerning the engine power enables the implementation of a direct torque controller.

The present invention has the advantage that significantly less power or fuel is consumed by electric vehicles, hybrid vehicles, and vehicles with internal combustion engine. This is because the present invention allows for a better controllability of CVT through direct position feedback, for better controllability of oil pressure such that oil pressure reserve is not needed and oil pumps need less power, and for a reduction of belt force and an increase of belt efficiency because the gear ratio is known.

Another advantage is a significantly better reliability of CVT for electric vehicles, hybrid vehicles, and vehicles with internal combustion engine because of less wear of the variators, less wear of the belt, and decreased possibility of slippage and belt tear. Especially in applications for electric and hybrid vehicles, where the torque is extremely high, the control can be adjusted to deliver always the same torque or maximum torque.

Yet another advantage of the present invention is a significantly better driver comfort for electric vehicles, hybrid vehicles, and vehicles with internal combustion engine because it allows for reducing the noise, vibration, and harshness problem known from CVT, and for a faster and smoother gear change than without displacement feedback

The present invention also relates to a corresponding method of encoding. The method comprises the following steps:

attaching at least one target wheel to a rotationally and axially, with respect to the rotational axis, movable element, the target wheel having a plurality of identical target elements arranged at regular intervals around a circumference of the target wheel, wherein the width of each target element continuously changes in axial direction,

detecting at least one sensor signal whose frequency represents the rotational speed and whose duty cycle represents the axial displacement of the at least one target wheel based on the detection of the target elements, and

generating an output signal indicating the axial displacement and rotational speed of the movable part of the moving element, the displacement speed, acceleration, gear ratio, clamping forces, torque, and/or diagnosis features.

The present invention also relates to a method of controlling a continuously variable transmission, wherein the continuously variable transmission has a primary pulley and a secondary pulley with a V-belt looped around the primary and secondary pulleys. The method comprises the following steps:

attaching at least one target wheel to the axially moving part of the primary and/or secondary pulley, the target wheel having a plurality of identical target elements arranged at regular intervals around a circumference of the target wheel, wherein the width of each target element continuously changes in axial direction,

detecting at least one sensor signal whose frequency represents the rotational speed and whose duty cycle represents the axial displacement of the at least one target wheel based on the detection of the target elements, and

generating an output signal indicating the axial displacement and rotational speed of the movable part of the primary pulley and/or the secondary pulley, the displacement speed, acceleration, gear ratio, clamping forces, torque, and/or diagnosis features.

The method of controlling a continuously variable transmission according to the present invention, wherein both the primary and the secondary pulley are equipped with a target wheel and a sensor probe, may further comprise the steps of determining the gear diameters d1 and d2 of the primary and the secondary pulley, measuring the rotational speed n1 and n2 of the primary and the secondary pulley, calculating the gear ratio $\frac{d2}{d1}$ from the measured gear diameters, calculating the rotational speed $n2_{Calculated}$ of one pulley from the measured rotational speed $n1_{Measured}$ of the other pulley and the gear ratio (see formula below), and calculating the belt slippage in terms of the difference between measured and calculated rotational speed.

$$n2_{Calculated} = \frac{d1_{Measured}}{d2_{Measured}} * n1_{Measured}$$

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:

**FIG. 1**      is a perspective drawing of an encoder device according to the present invention;

**FIG. 2**      is a graph of the sensor signal for different axial displacements according to the present invention;

**FIG. 3**      is a graph showing the relation between rotational speed and frequency according to the present invention;

**FIG. 4**      is a graph showing the relation between axial displacement and duty cycle according to the present invention;

**FIG. 5**      is a perspective drawing of a pulley and a target wheel with target elements and calibration elements according to the present invention;

**FIG. 6A**      is a graph showing a non-linear relation between axial displacement and duty cycle according to the present invention;

**FIG. 6B**      is a graph showing a linear relation between axial displacement and sensor output according to the present invention;

**FIG. 7**      is a block diagram illustrating the components of the encoder device according to an exemplary embodiment;

**FIG. 8**      is an overview of the sensing and signal processing steps executed by the encoder device;

**FIG. 9**      is a schematic diagram of a control system for controlling a continuously variable transmission according to the present invention;

**FIG. 10**      is a block diagram illustrating the components in an application of the invention for CVT with only one encoder device attached to the primary pulley;

**FIG. 11**      is a block diagram illustrating the components in an application of the invention for CVT with only one encoder device attached to the secondary pulley;

**FIG. 12**      is a block diagram illustrating the components in an application of the invention for CVT with encoder devices attached to both the primary and the secondary pulley;

**FIG. 13**      is a block diagram illustrating the components in an application of the invention for CVT with a single encoder device comprising target wheels and sensor probes attached to both the primary and the secondary pulley;

**FIG. 14**      is a block diagram illustrating the components in an application of the invention for CVT with a single encoder device comprising target wheels and sensor probes attached to both the primary and the secondary pulley and a bi-directional connection for communication with an ECU.

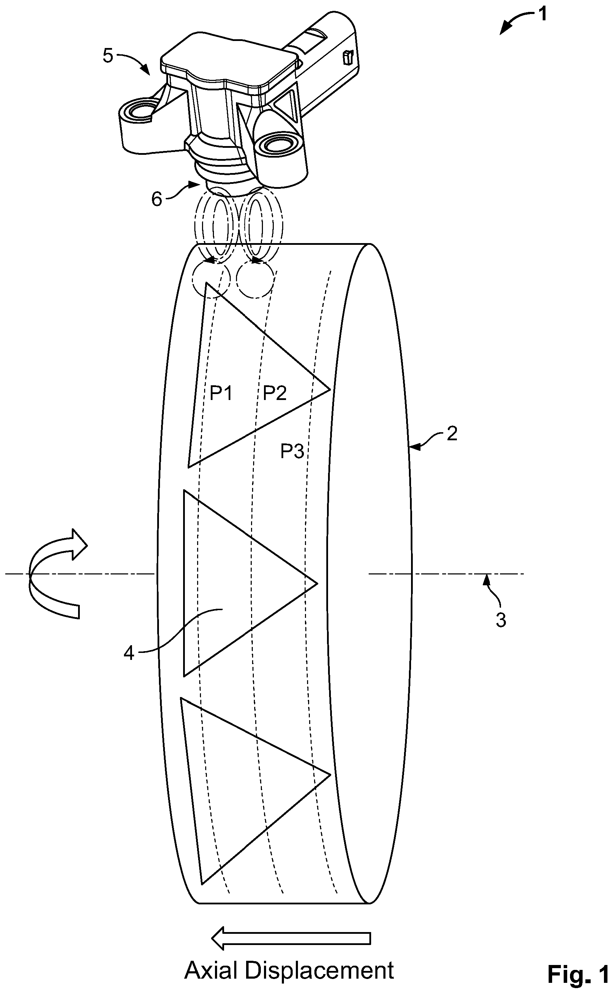

The present invention will now be explained in more detail with reference to the Figures and firstly referring to Figure 1. Figure 1 shows a perspective view of an encoder device 1 according to a possible embodiment of the present invention. The encoder device 1 comprises a target wheel 2 with a rotational axis 3. The target wheel 2 is movable in rotational and axial direction with respect to the rotational axis 3. It is equipped with a plurality of identical target elements 4, e.g. recesses, arranged at regular intervals around the circumference of the target wheel 2. Each target element has a width, which increases strictly monotonically in axial direction. In the exemplary embodiment shown in Figure 1, the target elements 4 have a triangle shape which is arranged symmetrically with respect to the rotational axis 3. Advantageously, the target elements 4 consist of an electrically conducting material like steel or copper, or are formed e.g. by a recess.

As shown in Figure 1, the encoder device 1 also comprises a sensor device 5. In the exemplary embodiment shown in Figure 1, the sensor device 5 is an eddy current sensor. The sensor device 5 is stationary in the sense that the rotational and axial movement of the target wheel 2 is relative to the position of the sensor device 5. The sensor device 5 is operable to detect two states of the target wheel 2 via a sensor probe 6, namely whether or not a target element 4 is present in the part of the target wheel 2 the sensor device 5 is focused at. The sensor probe 6 provides a sensor signal which represents the two states as a function of time.

As an alternative to an eddy current sensor, the sensor device 5 may comprise a magnetometer, a capacitive sensor, or an optical sensor. Moreover, each target element may be formed by a region having a different current carrying capacity and/or optical characteristics and/or magnetic characteristics and/or target wheel topography compared to the remaining target wheel. Thereby, the change of the target wheel topography may be one or more of an air gap in the target wheel, a recess in the target wheel, a groove on the target wheel, a slope or edge of the target wheel, or a hole in or of the target wheel. The sensor probe 6 may detect the target elements 4 in terms of a change of current carrying capacity, which may be a result of a target element material with an electrical conductivity different from a material of the remaining target wheel, the target element material being a copper or a hard potting, and/or the change of current carrying capacity is a result of the change of the target wheel topography.

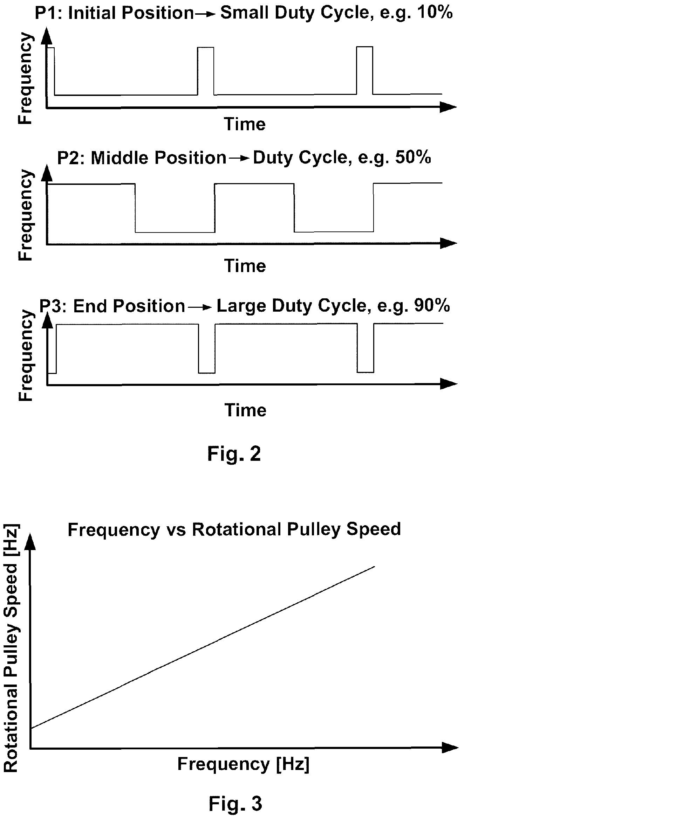

Figure 2 shows three graphs for sensor signals corresponding to three different axial displacement values of the target wheel 2. The positions P1, P2, and P3 on the target wheel are illustrated in Figure 1. Since the target elements 4 are identical and arranged at regular intervals around the circumference of the target wheel 2, the sensor signal that results from a rotating target wheel 2 is periodical. Thereby, the frequency of the sensor signal is proportional to the rotational speed of the target wheel 2. In Figure 2, the frequency is constant among the three graphs. Figure 3 shows a linear relation between the frequency of the sensor signal and the rotational speed of the target wheel 2.

As shown in Figure 2, the duty cycle of the sensor signal, i.e. the ratio between the time interval wherein the value of the sensor signal corresponds to the first state and the time interval wherein the value of the sensor signal corresponds to the second state within one period of the sensor signal, changes with the axial displacement of the target wheel 2. As the width of the target elements 4 strictly monotonically increases with increasing axial displacement of the target wheel 2 by design, the duty cycle of the sensor signal also increases with increasing axial displacement of the target wheel 2.

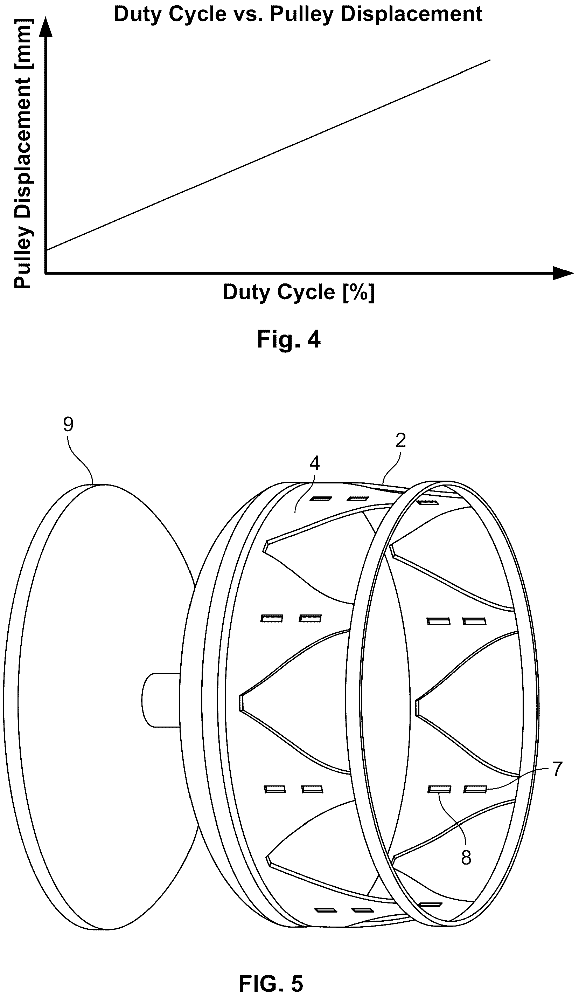

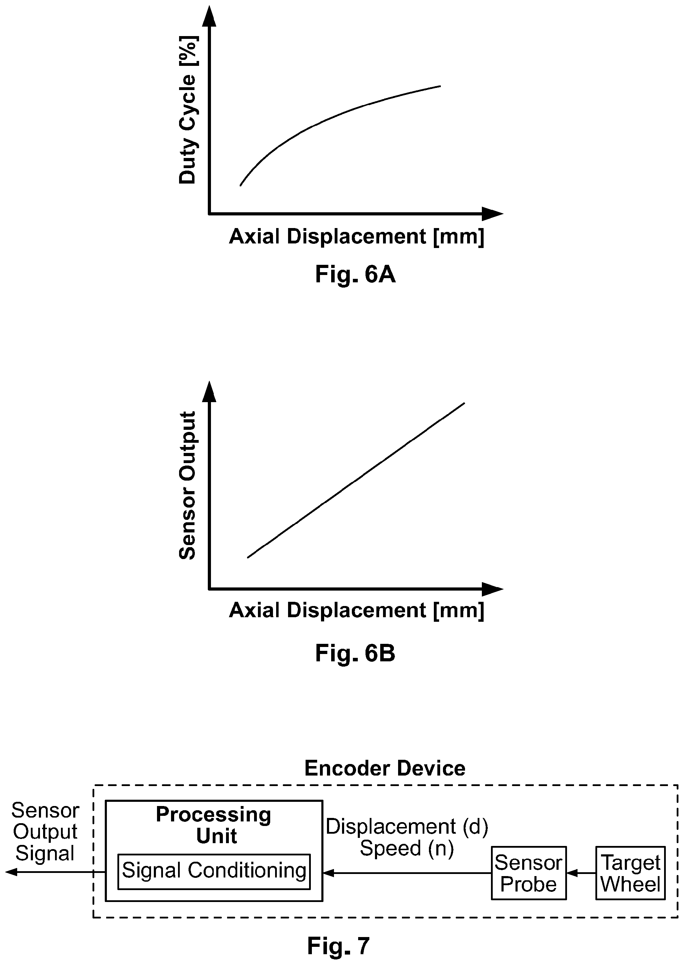

Advantageously, the relation between the duty cycle of the sensor signal and the axial displacement of the target wheel 2 is linear as in the example shown in Figure 4. Since the relation between the sensor signal and the axial displacement of the target wheel 2 depends on the shape of the target elements 4, the shape of the target elements 4 can be chosen such that a linear dependency can be approximated. Depending on the type of sensor used, it may be advantageous to choose target element shapes whose width does not change linearly with axial displacement of the target wheel. For example, the sides of the triangles shown in Figure 1 may have the shape of an arcsine function instead of a straight line. Such a shape of target elements 4 is illustrated in Figure 5. Figure 6A shows the case of a non-linear relation between the axial displacement and the duty cycle.

The sensor device 5 is equipped with a processing unit, which is operable to calculate the rotational speed and the axial displacement of the target wheel 2, and to provide an output signal containing these information. Figure 7 illustrates the components of the encoder device according to the first embodiment.

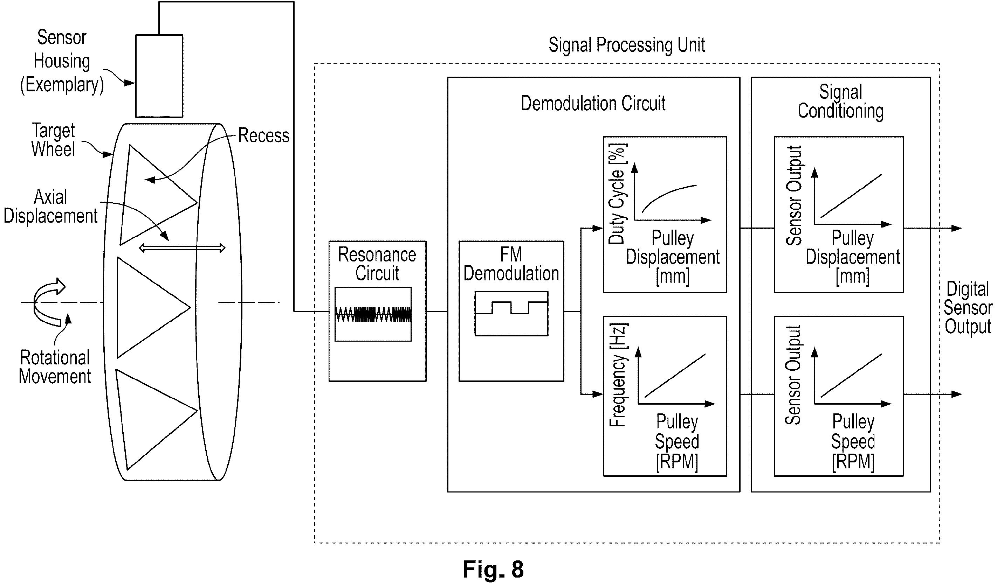

As shown in Figure 6B, the sensor output corresponding to the axial displacement may have a linear relation to the axial displacement although the relation between axial displacement and duty cycle is non-linear. Figure 8 gives an overview of the sensing and signal processing steps executed by the encoder device according to the present invention.

Figure 5 shows an exemplary embodiment of a driving pulley 9 and a target wheel 2 with target elements 4, each of which is equipped with two calibration elements 7 and 8. The calibration elements 7, 8 are arranged along the rotational axis of the target wheel 2 and have a predetermined distance. The calibration elements 7, 8 are detectable and distinguishable from the target elements 4 by the sensor probe. As the actual distance between the calibration elements 7, 8 is known, the detection information can be used for self-calibration of the sensor device 5 with respect to the axial displacement of the target wheel 2.

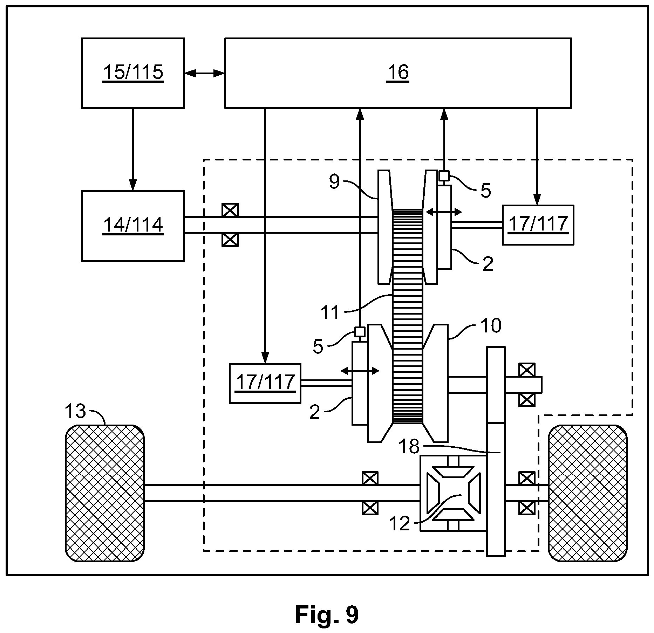

Figure 9 shows an exemplary application of the encoder device 1 according to the present invention as a part of a control system for controlling a continuously variable transmission. The continuously variable transmission has a primary, driving pulley 9, which is connected to the engine 14 in the case of a combustion engine and to the electric machine 114 in the case of an electric vehicle, and a secondary, driven pulley 10 that is connected to the wheels via a final drive 18 and a differential 12. Moreover, a V-belt 11 is looped around the primary 9 and secondary 10 pulleys. The primary 9 and secondary 10 pulleys are rotationally and axially movable, resulting in a change of width between the two cone-shaped discs and hence resulting in a changed gear diameter d1 or d2. The engine 14 or the electric machine 114 is controlled by an engine control unit 15 or an electric machine control unit, respectively.

Figure 9 shows that a target wheel 2 is attached to the primary pulley 9 and another target wheel 2 is attached to the secondary pulley 10. The target wheels 2 have a plurality of identical target elements 4 arranged at regular intervals around a circumference of the target wheels 2, wherein the width of each target element 4 continuously changes in axial direction. Moreover, the primary 9 and secondary 10 pulleys each have a sensor device 5 according to one of the above described embodiments. A CVT controller 16 receives output data from the sensor devices 5 and outputs data to the CVT control unit that actuates the pulleys, e.g. pneumatically, hydraulically or electrically by a servo motor. Moreover, the CVT controller 16 communicates with the engine/electric machine control unit 15, 115. This application can be used to determine the axial displacement and rotational speed of a primary pulley 9 on the engine side and a secondary pulley 10 on the tire side as control input parameters.

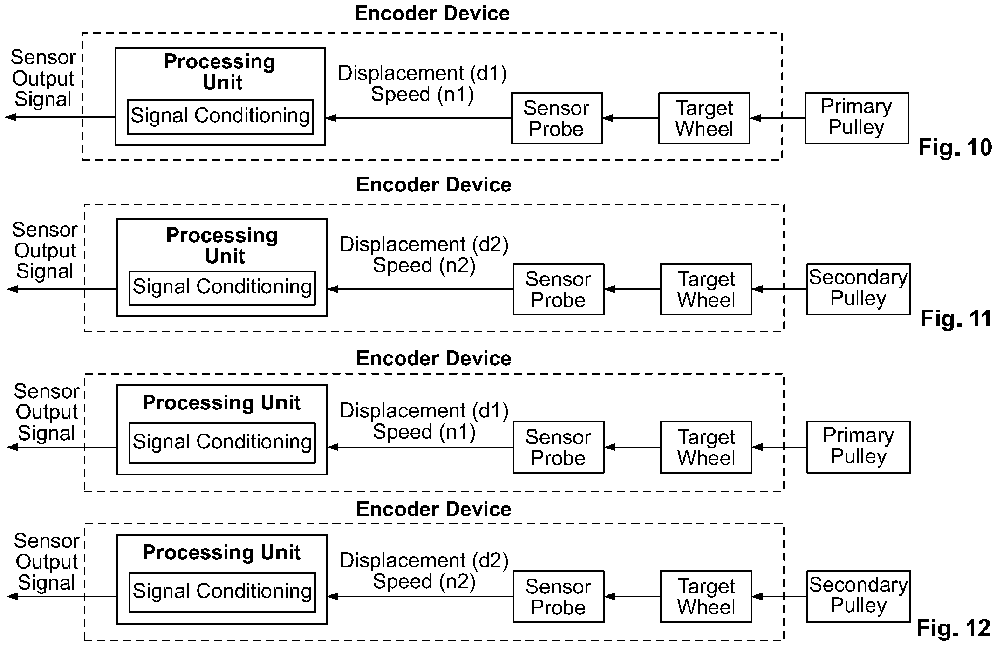

As shown in Figure 10 to 12, advantageous embodiments of the present invention may include only one encoder device attached to the primary pulley (see Figure 10), only one encoder device attached to the secondary pulley (see Figure 11), or encoder devices attached to both the primary and the secondary pulley (see Figure 12). Using sensors on both the engine and the tire side can improve the diagnostic and safety features of the control system due to an increase in redundancy, functional safety, and efficiency.

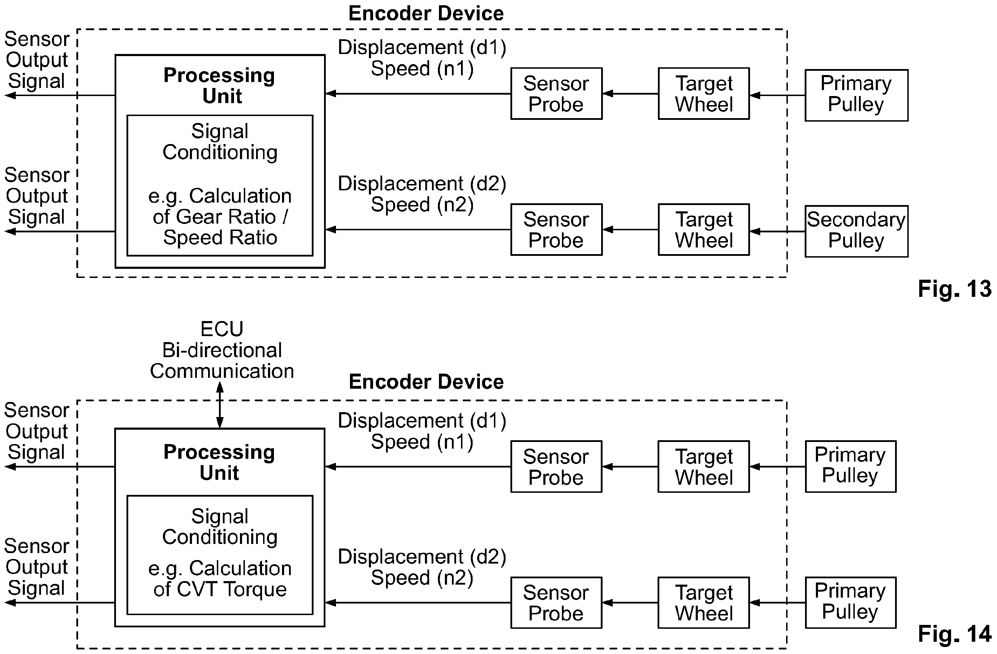

Figure 13 shows an embodiment of the present invention where both the primary 9 and the secondary pulley 10 are equipped with a target wheel and a sensor probe, but they share a single processing unit. As the processing unit receives information from both pulleys, this embodiment allows for a computation of higher-level parameters, such as the gear ratio or the speed ratio. Since the pulleys have the shape of cone-shaped discs, the pulley position in terms of the axial displacements of the pulleys 9, 10, can be measured and used to determine the gear diameters d1 and d2 of the primary 9 and secondary pulley 10, i.e. the radii on which the belt is running. Moreover, the rotational speed n1 and n2 of the primary 9 and secondary pulley 10 is measured.

From this information, the gear ratio $\frac{d2}{d1}$ and the speed ratio $\frac{n1}{n2}$ can be calculated. This information allows for a gear ratio control by a gear ratio controller, which receives the gear ratio as input. The gear ratio controller always chooses the gear ratio such that the engine works most efficiently. The direct position feedback according to the present invention enables a direct control of the clamping forces, which is not possible with state-of-the-art CVT controllers.

As the primary 9 and the secondary pulley 10 are connected by the V-belt, the gear ratio and the speed ratio have the same value:

$$\frac{d2}{d1} = \frac{n1}{n2}$$

This equation can be used to calculate the rotational speed of one pulley from the measured rotational speed of the other pulley and the measured gear diameters of both pulleys:

$$n2_{Calculated} = \frac{d1_{Measured}}{d2_{Measured}} * n1_{Measured}$$

Both calculating and measuring the rotational speed of one pulley allows for a plausibility check. If the two values are not equal, the difference between both values equals the belt slippage. Hence, the belt slippage can be calculated in terms of the difference between the measured rotational speed $n2_{Measured}$ and the calculated rotational speed $n2_{Calculated}$:

$$S = n2_{Measured} - n2_{Calculated}$$

Therefore, the present invention allows for determining the belt slippage. A dedicated slippage controller receives the gear ratio and the speed ratio as inputs. Since the belt slippage is controlled, slippage only occurs in the case of a blockade of a wheel. The CVT controller or the dedicated slippage controller can use the slippage information as input in order to reduce the belt clamping forces, i.e. the belt tension. In this way, the belt clamping forces can normally be reduced by 30%. Thereby, the transmission efficiency and the torque capacity can be increased, the maximum hydraulic pressure can be reduced and the power density can be improved.

Figure 14 shows another embodiment with a single processing unit and an additional bi-directional connection for communication with an ECU. The exchange of information between the encoder device and the ECU enables the calculation of additional parameters. For example, the encoder device can calculate the CVT torque, if the ECU transmits the engine power. This enables the implementation of a direct torque controller.

The sensor device 5 according to the present invention has the same mounting position as conventional speed sensors and therefore may replace existing speed sensors. Moreover, a modification of existing target wheels to fit the requirements of an application according to the present invention is possible.

REFERENCE NUMERALS

| Reference Numeral | Description |
| --- | --- |
| 1 | Encoder device |
| 2 | Target wheel |
| 3 | Rotational axis |
| 4 | Target element |
| 5 | Sensor device |
| 6 | Sensor probe |
| 7 | Calibration element |
| 8 | Calibration element |
| 9 | Primary pulley |
| 10 | Secondary pulley |
| 11 | V-belt |
| 12 | Differential |
| 13 | Wheel |
| 14 | Engine |
| 15 | Engine control unit |
| 16 | CVT controller |
| 17 | Oil pressure control unit |
| 18 | Final drive |
| 114 | Electric machine |
| 115 | Electric machine control unit |
| 117 | Servo motor |

**Claims**

1. A control system for controlling a continuously variable transmission, the continuously variable transmission having a primary pulley (9) and a secondary pulley (10) with a V-belt (11) looped around the primary (9) and secondary pulleys (10), the control system comprising:

   a first target wheel (2) attachable to the primary pulley (9) and a second target wheel (2) attached to the secondary pulley (10), each of the first target wheel and the second target wheel (2) having a plurality of identical target elements (4) arranged at regular intervals around a circumference of the respective target wheel (2), wherein the width of each target element (4) continuously changes in axial direction;
   a sensor device (5) comprising:

   a first sensor probe (6) which is operable to detect the target elements (4) of the first target wheel (2) and to provide a first time based signal that represents both the rotational speed and the axial displacement of the first target wheel (2) based on the detection of the target elements (4);
   a second sensor probe (6) which is operable to detect the target elements (4) of the second target wheel (2) and to provide a second time based signal that represents both the rotational speed and the axial displacement of the second target wheel (2) based on the detection of the target elements (4); and
   a processing unit which is configured to determine the axial displacement and the rotational speed of the primary pulley (9) based on the first time based signal,
   to determine the axial displacement and the rotational speed of the secondary pulley (11) based on the second time based signal, and
   to to provide said determined axial displacements and determined rotational speeds of the primary pulley and of the secondary pulley as control input parameters to the control system.

2. The control system according to claim 1, wherein

each target element (4) of the first target wheel and/or the second target wheel (2) is formed by a region having a different

current carrying capacity and/or
optical characteristics and/or
magnetic characteristics and/or
target wheel (2) topography

compared to the remaining target wheel (2).

3. The control system according to claim 2, wherein

the change of the target wheel (2) topography is one or more of:

an air gap in the target wheel (2),
a recess in the target wheel (2),
a groove on the target wheel (2),
a slope or edge of the target wheel (2), or
a hole in or of the target wheel (2);

the change of current carrying capacity is a result of a target element (4) material with an electrical conductivity different from a material of the remaining target wheel (2); and/or
the change of current carrying capacity is a result of the material and the thickness of the material of the target wheel (2).

4. The control system according to one of the preceding claims, wherein the sensor device (5) comprises an eddy current sensor, a magnetometer, a capacitive sensor, or an optical sensor.

5. The control system according to one of the preceding claims, wherein the first sensor probe (6) and/or the second sensor probe (6) includes a sensor coil, the sensor coil being a flat wound coil on a bobbin and/or a flat coil on a PCB in one or more layers.

6. The control system according to claim 5, wherein the sensor coil has a transmitting coil and a receiving coil or a combined coil that is used as transmitting and receiving coil, that are either wound coils or PCB coils on different layers, and/or a resonance signal of the sensor probe (6) can be induced in the receiving coil and the processing unit is operable to receive either a voltage, a current, a frequency, or a phase shift and to create a demodulated signal therefrom.

7. The control system according to one of the preceding claims, wherein

the duty cycle in terms of the ratio of either frequency, phase shift, current consumption, voltage difference of the first time based signal and/or the second time based signal is proportional to the axial movement of the respective target wheel (2);
the frequency of the first time based signal and/or the second time based signal is proportional to the rotational speed of the respective target wheel;
the variation of the first time based signal and/or the second time based signal is caused by a change of the respective target elements (4); and
each target element (4) is formed by a region having a different

current carrying capacity and/or
optical characteristics and/or
magnetic characteristics and/or
target wheel (2) topography

compared to the remaining target wheel (2).

8. The control system according to one of the preceding claims, wherein

the target elements (4) of the first target wheel and/or the second target wheel (2) substantially have the shape of a triangle or a trapezoid, which is arranged symmetrically along the rotational axis (3) of the movable element, and the sides of the triangles or trapezoids are straight lines or have the shape of an arcsine function.

9. A method of controlling a continuously variable transmission, the continuously variable transmission having a primary pulley (9) and a secondary pulley (10) with a V-belt (11) looped around the primary (9) and secondary pulleys (10), the primary pulley (9) having attached thereto first target wheel (2) and the secondary pulley (10) having attached thereto second target wheel (2), each of the first target wheel and the second target wheel (2) having a plurality of identical target elements (4) arranged at regular intervals around a circumference of the respective target wheel (2), wherein the width of each target element (4) continuously changes in axial direction, said method comprising:

detecting, with a first sensor probe (6), the target elements (4) of the first target wheel (2) and providing a first time based signal that represents both the rotational speed and the axial displacement of the first target wheel (2) based on the detection of the target elements (4);
detecting, with a second sensor probe (6), the target elements (4) of the second target wheel (2) and providing a second time based signal that represents both the rotational speed and the axial displacement of the second target wheel (2) based on the detection of the target elements (4);
determining the axial displacement and the rotational speed of the primary pulley (9) based on the first time based signal;
determining the axial displacement and the rotational speed of the secondary pulley (11) based on the second time based signal, and
providing said determined axial displacements and determined rotational speeds of the primary pulley and of the secondary pulley as control input parameters to the control system.

**Patentansprüche**

1. Ein Steuersystem zum Steuern eines stufenlosen Getriebes, wobei das stufenlose Getriebe eine Primärriemenscheibe (9) und eine Sekundärriemenscheibe (10) mit einem Keilriemen (11) aufweist, der um die Primär- (9) und Sekundärriemenscheiben (10) geschlungen ist, wobei das Steuersystem umfasst:

ein erstes Zielrad (2), das an der Primärriemenscheibe (9) befestigbar ist, und ein zweites Zielrad (2), das an der Sekundärriemenscheibe (10) befestigt ist, wobei sowohl das erste Zielrad als auch das zweite Zielrad (2) eine Vielzahl identischer Zielelemente (4) aufweisen, die in regelmäßigen Abständen um einen Umfang des jeweiligen Zielrads (2) angeordnet sind, wobei sich die Breite jedes Zielelements (4) in axialer Richtung kontinuierlich ändert;
eine Sensoreinrichtung (5), umfassend:

eine erste Sensorsonde (6), die so betrieben werden kann, dass sie die Zielelemente (4) des ersten Zielrads (2) erfasst und ein erstes zeitbasiertes Signal bereitstellt, das sowohl die Drehzahl als auch die axiale Verschiebung des ersten Zielrads (2) auf der Grundlage der Erfassung der Zielelemente (4) darstellt;
eine zweite Sensorsonde (6), die so betrieben werden kann, dass sie die Zielelemente (4) des zweiten Zielrads (2) erfasst und ein zweites zeitbasiertes Signal bereitstellt, das sowohl die Drehzahl als auch die axiale Verschiebung des zweiten Zielrads (2) auf der Grundlage der Erfassung der Zielelemente (4) darstellt; und
eine Verarbeitungseinheit, die so konfiguriert ist,
die axiale Verschiebung und die Drehzahl der Primärriemenscheibe (9) auf der Grundlage des ersten zeitbasierten Signals zu bestimmen,
die axiale Verschiebung und die Drehzahl der Sekundärriemenscheibe (11) auf der Grundlage des zweiten zeitbasierten Signals zu bestimmen und
die bestimmten axialen Verschiebungen und die bestimmten Drehzahlen der Primärriemenscheibe und der Sekundärriemenscheibe als Steuereingangsparameter für das Steuersystem bereitzustellen.

2. Das Steuersystem gemäß Anspruch 1, wobei

jedes Zielelement (4) des ersten Zielrads und/oder des zweiten Zielrads (2) durch einen Bereich gebildet wird, der eine andere
Strombelastbarkeit und/oder
optische Eigenschaften und/oder
magnetische Eigenschaften und/oder
Topographie des Zielrads (2)
im Vergleich zum verbleibenden Zielrad (2) aufweist.

3. Das Steuersystem gemäß Anspruch 2, wobei
die Änderung der Topographie des Zielrads (2) eine oder mehrere der folgenden ist:

ein Luftspalt im Zielrad (2),
eine Aussparung im Zielrad (2),
eine Nut im Zielrad (2),
eine Schräge oder Kante des Zielrads (2) oder
ein Loch in oder an dem Zielrad (2);
die Änderung der Stromtragfähigkeit ist das Ergebnis eines Materials des Zielelements (4) mit einer elektrischen Leitfähigkeit, die sich von einem Material des verbleibenden Zielrads (2) unterscheidet; und/oder
die Änderung der Stromtragfähigkeit ist das Ergebnis des Materials und der Dicke des Materials des Zielrads (2).

4. Das Steuersystem nach einem der vorstehenden Ansprüche, wobei die Sensoreinrichtung (5) einen Wirbelstromsensor, einen Magnetometer, einen kapazitiven Sensor oder einen optischen Sensor umfasst.

5. Das Steuersystem gemäß einem der vorhergehenden Ansprüche, wobei die erste Sensorsonde (6) und/oder die zweite Sensorsonde (6) eine Sensorspule umfasst, wobei die Sensorspule eine flache gewickelte Spule auf einer Spule und/oder eine flache Spule auf einer Leiterplatte in einer oder mehreren Schichten ist.

6. Das Steuersystem nach Anspruch 5, wobei die Sensorspule eine Sendespule und eine Empfangsspule oder eine kombinierte Spule, die als Sende- und Empfangsspule verwendet wird, aufweist, die entweder gewickelte Spulen oder PCB-Spulen auf unterschiedlichen Schichten sind, und/oder ein Resonanzsignal der Sensorsonde (6) in der Empfangsspule induziert werden kann und die Verarbeitungseinheit so betrieben werden kann, dass sie entweder eine Spannung, einen Strom, eine Frequenz oder eine Phasenverschiebung empfängt und daraus ein demoduliertes Signal erzeugt.

7. Das Steuersystem nach einem der vorstehenden Ansprüche, wobei

das Tastverhältnis in Bezug auf das Verhältnis von entweder Frequenz, Phasenverschiebung, Stromverbrauch, Spannungsdifferenz des ersten zeitbasierten Signals und/oder des zweiten zeitbasierten Signals proportional zur axialen Bewegung des jeweiligen Zielrads (2) ist;
die Frequenz des ersten zeitbasierten Signals und/oder des zweiten zeitbasierten Signals proportional zur Drehzahl des jeweiligen Zielrads ist;
die Variation des ersten zeitbasierten Signals und/oder des zweiten zeitbasierten Signals durch eine Änderung der jeweiligen Zielelemente (4) verursacht wird; und
jedes Zielelement (4) durch einen Bereich gebildet wird, der eine andere Strombelastbarkeit und/oder optische Eigenschaften und/oder
magnetische Eigenschaften und/oder
Topographie des Zielrads (2)
im Vergleich zum verbleibenden Zielrad (2) aufweist.

8. Das Steuersystem nach einem der vorstehenden Ansprüche, wobei

die Zielelemente (4) des ersten Zielrads und/oder des zweiten Zielrads (2) im Wesentlichen die Form eines Dreiecks oder eines Trapezes aufweisen, das symmetrisch entlang der Drehachse (3) des beweglichen Elements angeordnet ist, und
die Seiten der Dreiecke oder Trapeze gerade Linien sind oder die Form einer Arkussinusfunktion haben.

9. Ein Verfahren zur Steuerung eines stufenlosen Getriebes, wobei das stufenlose Getriebe eine Primärriemenscheibe (9) und eine Sekundärriemenscheibe (10) mit einem Keilriemen (11) aufweist, der um die Primär- (9) und Sekundärriemenscheibe (10) geschlungen ist, wobei an der Primärriemenscheibe (9) ein erstes Zielrad (2) angebracht ist und an der Riemenscheibe (10) ein zweites Zielrad (2) angebracht ist, wobei sowohl das erste Zielrad als auch das zweite Zielrad (2) eine Vielzahl identischer Zielelemente (4) aufweisen, die in regelmäßigen Abständen um den Umfang des jeweiligen Zielrads (2) angeordnet sind, wobei sich die Breite jedes Zielelements (4) in axialer Richtung kontinuierlich ändert, wobei das Verfahren Folgendes umfasst:

Erfassen der Zielelemente (4) des ersten Zielrads (2) mit einer ersten Sensorsonde (6) und Bereitstellen eines ersten zeitbasierten Signals, das sowohl die Drehzahl als auch die axiale Verschiebung des ersten Zielrads (2) basierend auf der Erfassung der Zielelemente (4) darstellt;

Erfassen der Zielelemente (4) des zweiten Zielrads (2) mit einer zweiten Sensorsonde (6) und Bereitstellen eines zweiten zeitbasierten Signals, das sowohl die Drehzahl als auch die axiale Verschiebung des zweiten Zielrads (2) auf der Grundlage der Erfassung der Zielelemente (4) darstellt;

Bestimmen der axialen Verschiebung und der Drehzahl der Primärriemenscheibe (9) auf der Grundlage des ersten zeitbasierten Signals;

Bestimmung der axialen Verschiebung und der Drehzahl der Sekundärriemenscheibe (11) auf der Grundlage des zweiten zeitbasierten Signals und

Bereitstellung der ermittelten axialen Verschiebungen und ermittelten Drehzahlen der Primärriemenscheibe und der Sekundärriemenscheibe als Steuereingangsparameter für das Steuersystem.

**Revendications**

1. Système de contrôle pour contrôler une transmission à variation continue, la transmission à variation continue comportant une poulie primaire (9) et une poulie secondaire (10), avec une courroie trapézoïdale (11) enroulée autour de la poulie primaire (9) et de la poulie secondaire (10), le système de contrôle comprenant :

une première roue cible (2) attachable à la poulie primaire (9) et une deuxième roue cible (2) attachée à la poulie secondaire (10), chaque roue parmi la première roue cible et la deuxième roue cible (2) comportant une pluralité d'éléments cibles identiques (4) agencés à intervalles réguliers autour d'une circonférence de la roue cible respective (2), dans lequel la largeur de chaque élément cible (4) change en continu en direction axiale ;

un dispositif capteur (5) comprenant :

une première sonde de capteur (6) qui est opérationnelle pour détecter les éléments cibles (4) de la première roue cible (2) et pour fournir un premier signal temporel qui représente à la fois la vitesse de rotation et le déplacement axial de la première roue cible (2) sur la base de la détection des éléments cibles (4) ;

une deuxième sonde de capteur (6) qui est opérationnelle pour détecter les éléments cibles (4) de la deuxième roue cible (2) et pour fournir un deuxième signal temporel qui représente à la fois la vitesse de rotation et le déplacement axial de la deuxième roue cible (2) sur la base de la détection des éléments cibles (4) ; et

une unité de traitement qui est configurée

pour déterminer le déplacement axial et la vitesse de rotation de la poulie primaire (9) sur la base du premier signal temporel,

pour déterminer le déplacement axial et la vitesse de rotation de la poulie secondaire (11) sur la base du deuxième signal temporel, et

pour fournir lesdits déplacements axiaux déterminés et vitesses de rotation déterminées de la poulie primaire et de la poulie secondaire comme paramètres d'entrée de contrôle au système de contrôle.

2. Système de contrôle selon la revendication 1, dans lequel

chaque élément cible (4) de la première roue cible et/ou de la deuxième roue cible (2) est formé par une région ayant des valeurs différentes

de capacité de transport de courant, et/ou
de caractéristiques optiques, et/ou
de caractéristiques magnétiques, et/ou
de topographie de la roue cible (2)

par rapport à la roue cible restante (2).

**3.** Système de contrôle selon la revendication 2, dans lequel

le changement de topographie de la roue cible (2) est le changement d'un ou plusieurs des éléments suivants :

une lame d'air dans la roue cible (2),
un renfoncement dans la roue cible (2),
une rainure sur la roue cible (2),
une pente ou un bord de la roue cible (2), ou
un trou dans ou de la roue cible (2) ;

le changement de la capacité de transport de courant est le résultat d'un matériau d'élément cible (4) ayant une conductivité électrique différente d'un matériau de la roue cible restante (2) ; et/ou
le changement de la capacité de transport de courant est le résultat du matériau et de l'épaisseur du matériau de la roue cible (2).

**4.** Système de contrôle selon l'une des revendications précédentes, dans lequel le dispositif capteur (5) comprend un capteur à courants de Foucault, un magnétomètre, un capteur capacitif ou un capteur optique.

**5.** Système de contrôle selon l'une des revendications précédentes, dans lequel la première sonde de capteur (6) et/ou la deuxième sonde de capteur (6) comprend une bobine de capteur, la bobine de capteur étant une bobine enroulée à plat sur un enroulement et/ou une bobine plate sur un circuit imprimé en une ou plusieurs couches.

**6.** Système de contrôle selon la revendication 5, dans lequel la bobine de capteur comporte une bobine émettrice et une bobine réceptrice, ou une bobine combinée qui est utilisée comme bobine émettrice et réceptrice, qui sont soit des bobines enroulées, soit des bobines de circuit imprimé sur différentes couches, et/ou un signal de résonance de la sonde de capteur (6) peut être induit dans la bobine réceptrice et l'unité de traitement est opérationnelle pour recevoir soit une tension, soit un courant, soit une fréquence, soit un déphasage, et pour créer un signal démodulé à partir de ce paramètre.

**7.** Système de contrôle selon l'une des revendications précédentes, dans lequel

le rapport cyclique en termes de rapport soit de fréquence, soit de déphasage, soit de consommation de courant, soit de différence de tension du premier signal temporel et/ou du deuxième signal temporel est proportionnel au mouvement axial de la roue cible respective (2) ;
la fréquence du premier signal temporel et/ou du deuxième signal temporel est proportionnelle à la vitesse de rotation de la roue cible respective ;
la variation du premier signal temporel et/ou du deuxième signal temporel est causée par un changement des éléments cibles respectifs (4) ; et
chaque élément cible (4) est formé par une région ayant des valeurs différentes

de capacité de transport de courant, et/ou
de caractéristiques optiques, et/ou
de caractéristiques magnétiques, et/ou
de topographie de la roue cible (2)

par rapport à la roue cible restante (2).

**8.** Système de contrôle selon l'une des revendications précédentes, dans lequel

les éléments cibles (4) de la première roue cible et/ou de la deuxième roue cible (2) ont substantiellement la forme d'un triangle ou d'un trapèze, qui est agencé symétriquement selon l'axe de rotation (3) de l'élément mobile, et
les côtés des triangles ou des trapèzes sont des lignes droites ou ont la forme d'une fonction arc sinus.

**9.** Procédé de contrôle d'une transmission à variation continue, la transmission à variation continue comportant une poulie primaire (9) et une poulie secondaire (10) avec une courroie trapézoïdale (11) enroulée autour de la poulie primaire (9) et de la poulie secondaire (10), une première roue cible (2) étant attachée à la poulie primaire (9) et une deuxième roue cible (2) étant attachée à la poulie secondaire (10), chaque roue parmi la première roue cible et la deuxième roue cible (2) comportant une pluralité d'éléments cibles identiques (4) agencés à intervalles réguliers autour d'une circonférence de la roue cible respective (2), dans lequel la largeur de chaque élément cible (4) change en continu en direction axiale, ledit procédé comprenant :

la détection, avec une première sonde de capteur (6), des éléments cibles (4) de la première roue cible (2) et la fourniture d'un premier signal temporel qui représente à la fois la vitesse de rotation et le déplacement axial de la première roue cible (2) sur la base de la détection des éléments cibles (4) ;

la détection, avec une deuxième sonde de capteur (6), des éléments cibles (4) de la deuxième roue cible (2), et la fourniture d'un deuxième signal temporel qui représente à la fois la vitesse de rotation et le déplacement axial de la deuxième roue cible (2) sur la base de la détection des éléments cibles (4) ;

la détermination du déplacement axial et de la vitesse de rotation de la poulie primaire (9) sur la base du premier signal temporel ;

la détermination du déplacement axial et de la vitesse de rotation de la poulie secondaire (11) sur la base du deuxième signal temporel, et

la fourniture au système de contrôle desdits déplacements axiaux déterminés et desdites vitesses de rotation déterminées de la poulie primaire et de la poulie secondaire comme paramètres d'entrée de contrôle.

Axial Displacement

Fig. 1

P1: Initial Position→ Small Duty Cycle, e.g. 10%

Time

P2: Middle Position→ Duty Cycle, e.g. 50%

Time

P3: End Position→ Large Duty Cycle, e.g. 90%

Time

Fig. 2

Frequency vs Rotational Pulley Speed

Frequency [Hz]

Fig. 3

## Duty Cycle vs. Pulley Displacement

Fig. 4

FIG. 5

Fig. 6A

Fig. 6B

**Encoder Device**

Sensor Output Signal

**Processing Unit**

Signal Conditioning

Displacement (d) Speed (n)

Sensor Probe

Target Wheel

Fig. 7

**Fig. 8**

**Fig. 9**

Fig. 10

Fig. 11

Fig. 12

**Encoder Device**

Sensor
Output
Signal

**Processing Unit**

Signal Conditioning

e.g. Calculation of Gear Ratio / Speed Ratio

Sensor
Output
Signal

Displacement (d1)
Speed (n1)

Sensor Probe

Target Wheel

Primary Pulley

Displacement (d2)
Speed (n2)

Sensor Probe

Target Wheel

Secondary Pulley

**Fig. 13**

ECU
Bi-directional
Communication

**Encoder Device**

Sensor
Output
Signal

**Processing Unit**

Signal Conditioning

e.g. Calculation of CVT Torque

Sensor
Output
Signal

Displacement (d1)
Speed (n1)

Sensor Probe

Target Wheel

Primary Pulley

Displacement (d2)
Speed (n2)

Sensor Probe

Target Wheel

Primary Pulley

**Fig. 14**

EP 4 152 009 B1

**REFERENCES CITED IN THE DESCRIPTION**

**Patent documents cited in the description**

- US 7402118 B2
- DE 19522840 A1
- DE 19609792 A1
- EP 2012086 A1

**Non-patent literature cited in the description**

- **BONSEN**. Performance optimization of the push-belt CVT by variator slip control. *Int. J. Vehicle Design*, 2005, vol. 39 (3)